# EUROPÄISCHE PATENTSCHRIFT

(11) **EP 4 034 393 B1**
(45) Veröffentlichungstag und Bekanntmachung des Hinweises auf die Patenterteilung: **07.06.2023**
(21) Anmeldenummer: 20776104.0
(22) Anmeldetag: 18.09.2020
(51) Int. Cl.: B60C 23/06, B60W 40/12, G01M 17/007, G01B 21/12

(54) **VERFAHREN ZUM ITERATIVEN ERMITTELN DES RADIUS' EINES KRAFTFAHRZEUGRADS**
METHOD FOR ITERATIVELY DETERMINING THE RADIUS OF A MOTOR VEHICLE WHEEL
PROCÉDÉ DE DÉTERMINATION ITÉRATIVE DU RAYON D'UNE ROUE DE VÉHICULE À MOTEUR

(30) Priorität: 27.09.2019 DE 102019214815
(43) Veröffentlichungstag der Anmeldung: 03.08.2022
(73) Patentinhaber: thyssenkrupp Presta AG, 9492 Eschen (LI); thyssenkrupp AG, 45143 Essen (DE)
(72) Erfinder: LUKÁCS, Loránd, 1149 Budapest (HU)
(74) Vertreter: thyssenkrupp Intellectual Property GmbH
(86) Internationale Anmeldenummer: PCT/EP2020/076068
(87) Internationale Veröffentlichungsnummer: WO 2021/058382

(56) Entgegenhaltungen:
- DE-A1-102011 118 436
- DE-A1-102012 000 213
- DE-A1-102016 103 637

## Beschreibung

### Stand der Technik

Die vorliegende Erfindung betrifft ein Verfahren zum iterativen Ermitteln des Radius' eines Rads von einer Vielzahl von Rädern eines Kraftfahrzeugs, wobei das Kraftfahrzeug zumindest eine Fahrrichtungssensoreinheit zum Erkennen von Geradeausfahrten aufweist, wobei jedem Rad der Vielzahl von Rädern zumindest eine Inkrementalsensoreinheit zum Erfassen von Raddrehbewegungen verkörpernden Inkrementen zugeordnet ist.

Auf dem Gebiet des autonomen Fahrens von Kraftfahrzeugen ist es von Wichtigkeit, die aktuellen Radien der einzelnen Räder eines Kraftfahrzeugs während der Fahrt zu kennen. Denn die einzelnen Radradien können je nach konkreter Frage- bzw. Zielsetzung als Eingangsgröße einer Berechnung zugeführt werden, um beispielsweise Schätzungen betreffend die Position und/oder die Orientierung des Kraftfahrzeugs durchzuführen. Solche Positions- und/oder Orientierungsschätzungen werden insbesondere beim automatisierten Ein- und Ausparken eines selbstfahrenden oder teilweise selbstfahrenden Personenkraftwagens durchgeführt.

Um die Radien der einzelnen Räder eines Kraftfahrzeugs zu ermitteln, sind aus dem Stand der Technik Verfahren bekannt, denen ein kinematisches oder dynamisches Modell zugrunde liegt. Diese Verfahren sind jedoch komplex sowie rechen- und laufzeitintensiv.

Aus der US 2002/0095253 A1 ist ein Verfahren bekannt zum Berechnen des Radius' eines Radreifens in Abhängigkeit des Luftdrucks des Radreifens und der Temperatur des Radreifens.

Ein Verfahren zum Bestimmen des Umfangs eines Kraftfahrzeugrades unter Berücksichtigung einer Wegstrecke bei konstanter Messgeschwindigkeit, wobei die Wegstrecke durch zwei von einer Satellitennavigation bestimmte Fahrzeugpositionen definiert ist, wird zudem in der DE 10 2012 000 213 A1 beschrieben.

Ferner ist aus der DE 10 2011 118 436 A1 bekannt, Änderungen des Reifens eines Kraftfahrzeugrades zu erkennen, wozu ein Verhältnis aus einer Rad-Wegstrecke und einer Referenz-Wegstrecke, die über eine Zeitdauer aufgenommen werden, gebildet wird.

Im Zusammenhang mit einem Einparkverfahren für ein Kraftfahrzeug offenbart die DE 10 2016 103 637 A1 zudem, dass Änderungen des Reifenradius gegenüber einem Standardreifenradius berücksichtigt werden können, wobei auf diversen Fahrzeugparametern beruhende Reifenradiusschätzungen durchgeführt werden.

Des Weiteren sind aus der WO 2005/097525 A1, EP 2 818 340 A1 und DE 10 2007 029 870 A1 jeweils Verfahren zum Erkennen von Druckverlust in einem Radreifen bekannt. Diese Verfahren erfordern allerdings zusätzliche Sensoren, wodurch zusätzliche Kosten entstehen, oder sind vergleichsweise komplex sowie rechen- und laufzeitintensiv.

Im Lichte der vorangehend erläuterten Nachteile der bekannten Verfahren liegt der vorliegenden Erfindung die Aufgabe zugrunde, ein vergleichsweise einfaches Verfahren zum Ermitteln eines Radradius' zur Verfügung zu stellen, welches die Sensorwerte von Sensoreinheiten nutzbar macht, die in heutigen Kraftfahrzeugen typischerweise vorhanden bzw. verbaut sind, sodass keine zusätzlichen Sensoren erforderlich sind.

### Darstellung der Erfindung

Die der vorliegenden Erfindung zugrundeliegende Aufgabe wird gelöst durch ein Verfahren mit den Merkmalen des Anspruchs 1. Vorteilhafte Weiterbildungen ergeben sich aus den Unteransprüchen.

Es wird ein Verfahren vorgeschlagen zum iterativen Ermitteln des Radius' eines Rads von einer Vielzahl von Rädern eines Kraftfahrzeugs, wobei das Kraftfahrzeug zumindest eine Fahrrichtungssensoreinheit zum Erkennen von Geradeausfahrten aufweist, wobei jedem Rad der Vielzahl von Rädern zumindest eine Inkrementalsensoreinheit zum Erfassen von Raddrehbewegungen verkörpernden Inkrementen zugeordnet ist.

Es handelt sich um ein iteratives Verfahren, das heißt, das Verfahren durchläuft in der Regel mehrere Iterationen bzw. Wiederholungen. Dabei dienen Ergebnisse von vorherigen Iterationen bzw. Wiederholungen als Berechnungsgrundlage für nachfolgende Iterationen bzw. Wiederholungen. Das Verfahren durchläuft zumindest eine Iteration bzw. Wiederholung, nämlich die erste Iteration bzw. Wiederholung. Eine Iteration bzw. Wiederholung des Verfahrens umfasst folgende Schritte:
Zunächst wird geprüft, ob das Kraftfahrzeug fährt, basierend auf Sensorwerten von zumindest einer der zumindest einen Inkrementalsensoreinheit. Auf diese Weise ist die Grundvoraussetzung für die Anwendbarkeit des erfindungsgemäßen Verfahrens sichergestellt, nämlich die Fahrbewegung des Kraftfahrzeugs.

Wenn eine Fahrbewegung erfolgreich geprüft bzw. erkannt worden ist, wird anschließend geprüft, ob das Kraftfahrzeug geradeaus fährt, basierend auf Sensorwerten der zumindest einen Fahrrichtungssensoreinheit. Eine Geradeausfahrt ist dadurch charakterisiert, dass sämtliche Räder des Kraftfahrzeugs parallel zueinander ausgerichtet sind. Die Prüfung bzw. Erkennung einer Geradeausfahrt ermöglicht es, zu verhindern, dass während einer Kurvenfahrt ermittelte Radradien einer weiterführenden Verwendung zugeführt werden. Dies ist von Wichtigkeit für die Qualität bzw. Zuverlässigkeit bzw. Aussagekraft der ermittelten Radradien, da die während einer Kurvenfahrt ermittelten Radradien nicht den tatsächlichen Radradien entsprechen, da die in einer Kurve äußeren Räder schneller abrollen als die in einer Kurve inneren Räder.

Wenn eine Geradeausfahrt erfolgreich geprüft bzw. erkannt worden ist, wird anschließend geprüft, ob jedes Rad der Vielzahl von Rädern rutsch- und schlupffrei ist, basierend auf Sensorwerten von zumindest einer der zumindest einen Inkrementalsensoreinheit. Die Prüfung bzw. Erkennung einer rutsch- und schlupffreien Geradeausfahrt ermöglicht es, zu verhindern, dass bei Rutsch- und Schlupfzuständen ermittelte Radradien einer weiterführenden Verwendung zugeführt werden. Dies dient ebenfalls zur Gewährleistung von Qualität bzw. Zuverlässigkeit bzw. Aussagekraft der ermittelten Radradien, da während Rutsch- und Schlupfzuständen ermittelte Radradien nicht den tatsächlichen Radradien entsprechen. Dies ist darin begründet, dass rutsch- und schlupfbehaftete Räder langsamer oder schneller drehen als rutsch- und schlupffreie Räder. Daher entspricht die gefahrene Strecke eines einzelnen, rutsch- und schlupfbehafteten Rades nicht der gefahrenen Strecke eines einzelnen, rutsch- und schlupffreien Rades. Eine solche Messung wäre also nicht gültig und zu verwerfen bzw. nicht einer weiterführenden Verwendung zuzuführen.

Wenn eine rutsch- und schlupffreie Geradeausfahrt des Kraftfahrzeugs erfolgreich geprüft bzw. erkannt worden ist, wird die gefahrene Strecke von jedem Rad der Vielzahl von Rädern bestimmt, nämlich basierend auf dem Sensorwert der jeweiligen Inkrementalsensoreinheit und dem iterativ zu ermittelnden Radius des Rads einer der vorherigen Iterationen. Der iterativ zu ermittelnde Radius des Rads einer der vorherigen Iterationen entspricht im Falle der ersten Iteration des Verfahrens einem initial festgelegten, als Startwert dienenden Wert. Dieser Startradiuswert kann anhand der vom Hersteller angegebenen Radnennmaße ermittelt werden.

Anschließend wird die gefahrene Strecke des Kraftfahrzeugs bestimmt basierend auf der gefahrenen Strecke von jedem Rad der Vielzahl von Rädern.

Anschließend wird der iterativ zu bestimmende Radius' des Rads ermittelt basierend auf der gefahrenen Strecke des Kraftfahrzeugs und dem Sensorwert der jeweiligen I nkrementalsensoreinheit.

Anschließend wird geprüft, ob eine Validierungsbedingung erfüllt ist. Die Validierungsbedingung ist vor der Ausführung des Verfahrens festzulegen. Die Validierungsbedingung kann in zeitlicher Hinsicht bzw. im Hinblick auf den Verfahrensablauf vor, während oder nach dem Ermitteln des iterativ zu ermittelnden Radradius' durchgeführt werden.

Mit Hilfe der Validierungsbedingung wird geprüft, ob die ermittelten Radien hinreichend zuverlässig sind, das heißt, ob den ermittelten Radien "vertraut" werden kann. Mit anderen Worten: Wenn die Validierungsbedingung erfüllt ist, dann können die ermittelten Radien als den tatsächlichen Radien hinreichend genau entsprechend angenommen werden. Somit ist durch die Festlegung der Validierungsbedingung ein Qualitätsmaß betreffend die ermittelten Radiuswerte definierbar.

Wenn die Validierungsbedingung erfüllt ist, werden die vorgenannten Schritte wiederholt.

Bei dem erfindungsgemäßen Verfahren handelt es sich um ein iteratives Verfahren, das heißt, um ein sich wiederholendes und dabei auf zuvor ermittelte Ergebnisse der Radradien stützendes Verfahren. Es wird mindestens eine Iteration bzw. Wiederholung des Verfahrens durchlaufen, wobei jede Iteration bzw. Wiederholung grundsätzlich alle der vorgenannten Schritte umfasst, es sei denn einzelne Voraussetzungen werden negativ geprüft. In der Regel werden mehrere Verfahrensiterationen durchlaufen, und zwar werden Verfahrensiterationen durchgeführt solange eine Fahrbewegung des Kraftfahrzeugs erkannt wird.

Der Radius eines einzelnen Rads wird im Rahmen der vorliegenden Erfindung als Individualradius bezeichnet. Der innerhalb einer einzigen Iteration bzw. Wiederholung des Verfahrens durch Berechnungen ermittelte Radius eines einzelnen Rads, das heißt, das Zwischenrechenergebnis einer einzigen Iteration bzw. Wiederholung wird im Rahmen der vorliegenden Erfindung A-Posteriori-Individualradius genannt. Der innerhalb einer einzigen Iteration bzw. Wiederholung des Verfahrens als Eingangswert für die Berechnungen dienende Radius eines einzelnen Rads wird A-Priori-Individualradius genannt.

Die Fahrrichtungssensoreinheit des Kraftfahrzeugs kann einen Inertialsensor zum Erfassen von Trägheitskräften aufweisen. Inertialsensoren umfassen Beschleunigungs- und Drehratensensoren. Zusätzlich oder alternativ kann die Fahrrichtungssensoreinheit einen Gierratensensor zum Erfassen der Gierrate oder des Gierwinkels um die Gierachse des Kraftfahrzeugs aufweisen. Die Gierachse ist die vertikale Achse des fahrzeugfesten Koordinatensystems. Weiter zusätzlich oder alternativ kann die Fahrrichtungssensoreinheit einen Lenkwinkelsensor aufweisen. Der Lenkwinkelsensor bzw. Lenkradwinkelsensor erfasst den Einschlagwinkel des Lenkrads. Mehrere Sensoren innerhalb der Fahrrichtungssensoreinheit bilden jeweils Redundanzen. Dies erhöht die Ausfallsicherheit der Fahrrichtungssensoreinheit. Wenn die Sensoren zudem jeweils auf verschiedenen Messprinzipien beruhen, verbessert dies die Qualität bzw. Zuverlässigkeit der Fahrrichtungssensoreinheit.

Die Inkrementalsensoreinheit umfasst einen Inkrementalsensor, auch als Inkrementalgeber bezeichnet, zur Erfassung von Raddrehbewegungen bzw. Radabrollbewegungen bzw. Radwinkeländerungen verkörpernden Inkrementen. Die Inkrementalsensoreinheiten können jeweils als ABS-Sensor - Sensor eines Antiblockiersystems - oder als ESP-Sensor - Sensor eines elektronischen Stabilitätssystems - ausgebildet sein, die in heutigen Kraftfahrzeugen regelmäßig ohnehin vorhanden bzw. verbaut sind. Dies hat den Vorteil, dass keine zusätzlichen Sensoren erforderlich sind. Dadurch entstehen keine zusätzlichen Kosten, sodass die Umsetzung des erfindungsgemäßen Verfahrens kosteneffizient ist. Die Inkremente sind sich wiederholende, periodische Abschnitte, die über den gesamten Umfang einer vorzugsweise kreisrunden Scheibe regelmäßig verteilt sind. Während der Raddrehbewegung bzw. Radabrollbewegung zählt eine Zähleinheit die sich an ihr vorbeibewegenden Inkremente. Die Zähleinheit kann einen Schleifkontakt aufweisen oder berührungslos, beispielsweise optisch, magnetisch, induktiv oder dergleichen, sein. Die Anzahl an erfassten Inkrementen kann in eine Winkeländerung umgerechnet werden. Die Winkeländerung wird schließlich auf einen eine bekannte Winkelstellung verkörpernden Referenzwert bezogen. Die Inkrementalsensoreinheit beruht somit auf einem relativen Messprinzip.

In vorteilhafter Weise wird eine Fahrbewegung erkannt bzw. mit Erfolg geprüft, nämlich in Form eines numerischen Wertevergleichs, wenn sich zwischen zwei aufeinanderfolgenden, insbesondere zwei innerhalb eines festlegbaren Zeitspanne aufeinanderfolgenden, vorzugsweise zwei unmittelbar aufeinanderfolgenden, Zeitschritten der Sensorwert eines der oder aller Inkrementalsensoreinheiten um einen oder mehr als einen entsprechenden, festlegbaren Schwellwert ändert. Dieser Schwellwert ist vor der Inbetriebnahme festzulegen und kann als veränderbare Einstellung einer Steuerungseinheit eintragbar sein oder als unveränderbare oder hartkodierte Einstellung der Steuerungseinheit eingetragen sein.

In weiter vorteilhafter Weise wird eine Geradeausfahrt erkannt bzw. mit Erfolg geprüft, nämlich in Form eines numerischen Wertevergleichs, wenn sich zwischen zwei aufeinanderfolgenden, insbesondere zwei innerhalb eines festlegbaren Zeitspanne aufeinanderfolgenden, vorzugsweise zwei unmittelbar aufeinanderfolgenden, Zeitschritten der Sensorwert der zumindest einen Fahrrichtungssensoreinheit um weniger als einen oder bis zu einen entsprechenden, festlegbaren Schwellwert ändert. Mit anderen Worten: Eine Kurvenfahrt wird erkannt, wenn sich zwischen zwei aufeinanderfolgenden Zeitschritten der Sensorwert der zumindest einen Fahrrichtungssensoreinheit um mehr als diesen Schwellwert ändert. Dieser Schwellwert ist vor der Inbetriebnahme festzulegen und kann als veränderbare Einstellung einer Steuerungseinheit eintragbar sein oder als unveränderbare oder hartkodierte Einstellung der Steuerungseinheit eingetragen sein.

In noch weiter vorteilhafter Weise wird eine rutsch- und schlupffreie Geradeausfahrt erkannt bzw. mit Erfolg geprüft, nämlich in Form eines numerischen Wertevergleichs, wenn die Sensorwerte von zumindest zwei der Inkrementalsensoreinheiten um weniger als einen oder bis zu einen entsprechenden, festlegbaren Schwellwert voneinander abweichen. Mit anderen Worten: Ein Rutsch- und Schlupfzustand wird erkannt, wenn die Sensorwerte von zumindest zwei der Inkrementalsensoreinheiten um mehr als diesen Schwellwert voneinander abweichen. Dieser Schwellwert ist vor der Inbetriebnahme festzulegen und kann als veränderbare Einstellung einer Steuerungseinheit eintragbar sein oder als unveränderbare oder hartkodierte Einstellung der Steuerungseinheit eingetragen sein.

Bevorzugt wird die gefahrene Strecke des Rads bestimmt mittels Multiplizieren des Sensorwerts der jeweiligen Inkrementalsensoreinheit mit der Auflösung der jeweiligen Inkrementalsensoreinheit und mit dem iterativ zu ermittelnden Radius des Rads. Dies ist eine vergleichsweise wenig komplexe und somit wenig rechen- und laufzeitintensive Bestimmung.

Weiter bevorzugt wird die gefahrene Strecke des Kraftfahrzeugs bestimmt mittels Berechnen eines Durchschnittswerts, insbesondere eines arithmetischen, geometrischen oder quadratischen Mittelwerts, der gefahrenen Strecke aller Räder.

Noch weiter bevorzugt wird der iterativ zu ermittelnde Radius des Rads ermittelt mittels Dividieren der gefahrenen Strecke des Kraftfahrzeugs durch den Sensorwert der jeweiligen Inkrementalsensoreinheit und durch die Auflösung der jeweiligen Inkrementalsensoreinheit.

Noch weiter bevorzugt umfasst die Validierungsbedingung eine oder mehrere Validierungskriterien, wobei die Validierungsbedingung erfüllt ist, wenn alle Validierungskriterien erfüllt sind.

Ein Validierungskriterium ist in vorteilhafter Weise erfüllt, wenn eine festlegbare Relaxationslänge erreicht worden ist, wobei die Relaxationslänge als akkumulierte, gefahrene Strecke definierbar ist, insbesondere diejenige gefahrene Strecke bevor die Seitenführungskraft bei einer Kurvenfahrt des Rads etwa 63 % ihres stationären Werts erreicht oder diejenige gefahrene Strecke, die in etwa dem Wert eines Radius' entspricht.

Zusätzlich oder alternativ ist ein Validierungskriterium in vorteilhafter Weise erfüllt, wenn eine festlegbare gefahrene Strecke des Rads oder eine festlegbare gefahrene Strecke des Kraftfahrzeugs oder eine festlegbare Anzahl von erfassten Inkrementen von zumindest einer der zumindest einen Inkrementalsensoreinheit erreicht worden ist.

### Beschreibung der Zeichnung

Eine vorteilhafte Ausführungsform der Erfindung ist im Folgenden anhand der Zeichnung näher erläutert. Darin zeigen im Einzelnen
- Figur 1: eine Ausführungsform des erfindungsgemäßen Verfahrens in einer Darstellung als Flussdiagramm,
- Figur 2: ein Lenksystem für ein Kraftfahrzeug, auf dessen Räder das Verfahren aus Figur 1 anwendbar ist, in einer schematischen, perspektivischen Darstellung.

### Ausführungsform der Erfindung

In den verschiedenen Figuren sind gleiche Teile stets mit den gleichen Bezugszeichen versehen und sind daher in der Regel jeweils nur einmal benannt bzw. erwähnt.

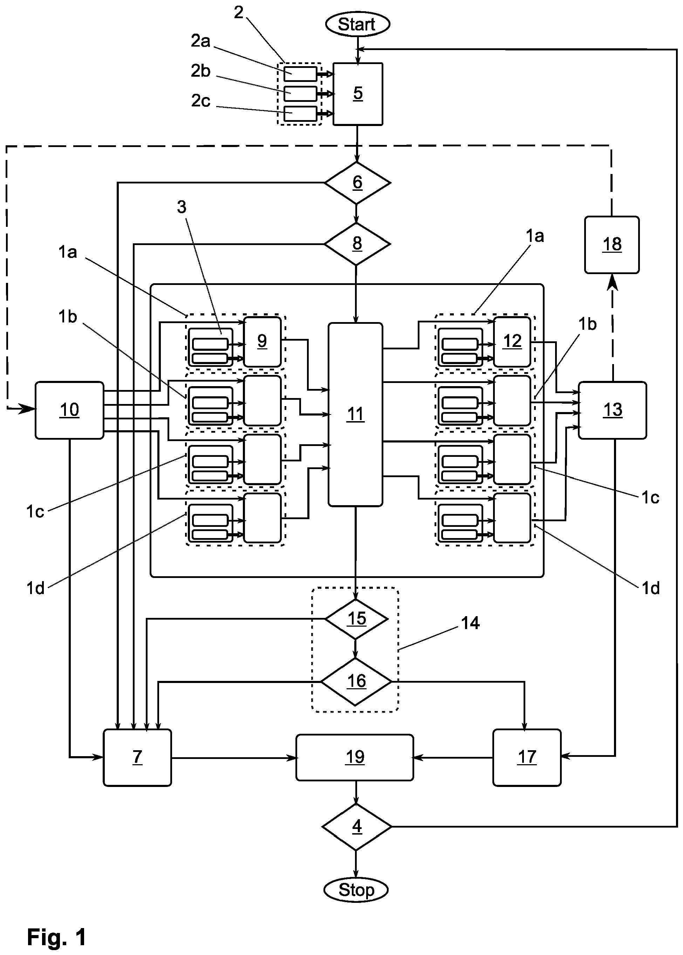

Figur 1 zeigt eine Ausführungsform des erfindungsgemäßen Verfahrens in einer Darstellung als Flussdiagramm.

Das Verfahren der vorliegenden Ausführungsform dient zum iterativen Ermitteln der jeweiligen Werte des Radius' von vier Rädern 1a, 1b, 1c und 1d eines in den Figuren nicht dargestellten Kraftfahrzeugs.

Das Kraftfahrzeug weist eine Fahrrichtungssensoreinheit 2 zum Erkennen von Geradeausfahrten auf. Die Fahrrichtungssensoreinheit 2 ist in der Lage, zu unterscheiden, ob das Kraftfahrzeug geradeaus oder eine Kurve fährt. Die Fahrrichtungssensoreinheit 2 weist einen Inertialsensor 2a, einen Gierratensensor 2b und einen Lenkwinkelsensor 2c auf. Die drei Sensoren 2a, 2b und 2c bilden jeweils Redundanzen und beruhen außerdem jeweils auf verschiedenen Messprinzipien. Dies erhöht die Ausfallsicherheit der Fahrrichtungssensoreinheit 2 und verbessert deren Qualität bzw. Zuverlässigkeit.

Nachdem das Verfahren gestartet worden ist - vgl. "START" des Verfahrens - werden in einem ersten Schritt die Sensorwerte der dem jeweiligen Rad 1 zugeordneten Inkrementalsensoreinheiten 3 hinsichtlich der Erkennung einer Fahrbewegung des Kraftfahrzeugs geprüft, wobei die Inkrementalsensoreinheiten 3 jeweils als ABS-Sensor ausgebildet sind. Dies ist als eine Fahrbewegungsabfrage 4 dargestellt. Eine Fahrbewegung wird durch einen numerischen Sensorwertvergleich erkannt, nämlich sobald sich der Sensorwert der jeweiligen Inkrementalsensoreinheiten 3 zwischen zwei aufeinanderfolgenden Zeitschritten um mehr als einen entsprechenden, festlegbaren Schwellwert ändert. Der Schwellwert für die Erkennung einer Fahrbewegung ist vor der Inbetriebnahme festgelegt.

Wenn die Prüfung hinsichtlich der Erkennung einer Fahrbewegung des Kraftfahrzeugs positiv endet, dann wird das Verfahren mit dem nächsten, auf das iterative Ermitteln des Radradius' gerichtete Schritt fortgesetzt. Ansonsten wird das Verfahren angehalten bzw. terminiert - vgl. "STOP" des Verfahrens. Die Fahrbewegung des Kraftfahrzeugs ist somit eine notwendige Voraussetzung für die Anwendbarkeit des Verfahrens.

Unter der Voraussetzung, dass eine Fahrbewegung erkannt worden ist, werden in einem nächsten Schritt die jeweiligen Sensorwerte der Sensoren 2a, 2b und 2c der Fahrrichtungssensoreinheit 2 einer Geradeausfahrtanalyse 5 zugeführt. Das Ergebnis der Geradeausfahrtanalyse 5 wird hinsichtlich der Erkennung einer Geradeausfahrt geprüft. Dies ist als eine Geradeausfahrtabfrage 6 dargestellt. Eine Geradeausfahrt wird durch einen numerischen Sensorwertvergleich erkannt, und zwar wenn sich der Sensorwert einer der Sensoren 2a, 2b oder 2c zwischen zwei aufeinanderfolgenden Zeitschritten bis zu einen entsprechenden, festgelegten Schwellwert ändert. Der Schwellwert für die Erkennung einer Geradeausfahrt ist vor der Inbetriebnahme festgelegt.

Sofern die Prüfung hinsichtlich der Erkennung einer Geradeausfahrt des Kraftfahrzeugs positiv endet, wird das Verfahren mit dem nächsten, auf das iterative Ermitteln des Radradius' gerichteten Schritt fortgesetzt. Andernfalls wird das Verfahren über eine Ablehnung 7 neuer A-Posteriori-Individualradien für die aktuelle Iteration fortgesetzt. Das heißt, für die Durchführung der nachfolgenden Iteration bzw. Wiederholung des Verfahrens werden dann die bisherigen Radradien verwendet.

Unter der Voraussetzung, dass eine Geradeausfahrt erkannt worden ist, werden in einem nächsten Schritt die jeweiligen Sensorwerte der Inkrementalsensoreinheiten 3 hinsichtlich der Erkennung von Rutsch- und Schlupfzuständen der jeweiligen Räder 1 geprüft. Dies ist als eine Rutsch- und Schlupfabfrage 8 dargestellt. Ein Rutsch- und Schlupfzustand wird durch einen numerischen Sensorwertvergleich erkannt, nämlich sobald die Sensorwerte von zumindest zwei der Inkrementalsensoreinheiten 3 um bis zu einen entsprechenden, festgelegten Schwellwert voneinander abweichen. Der Schwellwert für die Erkennung eines Rutsch- und Schlupfzustands ist vor der Inbetriebnahme festgelegt.

Wenn die Prüfung hinsichtlich der Erkennung einer rutsch- und schlupffreien Geradeausfahrt des Kraftfahrzeugs positiv endet, wird das Verfahren mit dem nächsten, auf das iterative Ermitteln des Radradius' gerichteten Schritt fortgesetzt. Andernfalls wird das Verfahren über die Ablehnung 7 neuer A-Posteriori-Individualradien für die aktuelle Iteration fortgesetzt. Es werden dann nämlich die bisherigen Radradien für die Durchführung der nächsten Iteration bzw. Wiederholung des Verfahrens verwendet.

Unter der Voraussetzung, dass eine rutsch- und schlupffreie Geradeausfahrt erkannt worden ist, werden in einem nächsten Schritt die gefahrenen Strecken der einzelnen Räder 1 bestimmt, und zwar durch eine A-Priori-Individualstreckenberechnung 9. Die gefahrene Strecke eines einzelnen Fahrzeugrads 1 wird berechnet als mathematisches Produkt des Sensorwerts der jeweiligen Inkrementalsensoreinheit 3, der Auflösung der jeweiligen Inkrementalsensoreinheit 3 und dem jeweiligen A-Priori-Individualradius. Der jeweilige A-Priori-Individualradius ist in einem A-Priori-Individualradiuszwischenspeicher 10 hinterlegt.

Innerhalb der ersten Iteration des Verfahrens entsprechen die A-Priori-Individualradien initial festgelegten, als Startwert dienende Radiuswerten. Die Startwerte der A-Priori-Individualradien sind Nenn- oder Erfahrungswerte, die vor der Inbetriebnahme festgelegt werden.

In allen anderen Fällen, das heißt, innerhalb jeder weiteren Iteration ab der zweiten Iteration des Verfahrens, gilt Folgendes:
Falls in der unmittelbar vorherigen Iteration eine rutsch- und schlupffreie Geradeausfahrt erkannt worden ist und die Validierungsbedingung erfüllt worden ist und falls in der aktuellen Iteration keine rutsch- und schlupffreie Geradeausfahrt erkannt wird, entsprechen die A-Priori-Individualradien den A-Posteriori-Individualradien aus der unmittelbar vorherigen Iteration bzw. Wiederholung.

Falls in der unmittelbar vorherigen Iteration eine rutsch- und schlupffreie Geradeausfahrt erkannt worden ist und die Validierungsbedingung erfüllt worden ist und falls in der aktuellen Iteration zwar eine rutsch- und schlupffreie Geradeausfahrt erkannt wird, aber die Validierungsbedingung nicht erfüllt wird, entsprechen die A-Priori-Individualradien den A-Priori-Individualradien aus der unmittelbar vorherigen Iteration bzw. Wiederholung.

In einem nächsten Schritt wird die gefahrene Strecke des Kraftfahrzeugs bestimmt, nämlich durch eine Gesamtstreckenberechnung 11. Dazu wird der arithmetische Mittelwert der vier gefahrenen Strecken der einzelnen Räder 1 berechnet.

Die Bezeichnung "A-Priori" bezieht sich auf Zeitabschnitte oder Programmablaufreihenfolgen innerhalb einer Iteration bzw. Wiederholung vor der Gesamtstreckenberechnung 11. Die Bezeichnung "A-Posteriori" bezieht sich auf Zeitabschnitte oder Programmablaufreihenfolgen innerhalb einer Iteration bzw. Wiederholung nach der Gesamtstreckenberechnung 11.

Anschließend werden durch eine A-Posteriori-Individualradiusberechnung 12 die iterativ zu ermittelnden Radien der jeweiligen Räder 1 bzw. die jeweiligen A-Posteriori-Individualradien ermittelt. Der jeweilige A-Posteriori-Individualradius wird berechnet als mathematischer Quotient aus der gefahrenen Strecke des Kraftfahrzeugs und dem Sensorwert der entsprechenden Inkrementalsensoreinheit 3 sowie der Auflösung der entsprechenden Inkrementalsensoreinheit 3. Die jeweiligen A-Posteriori-Individualradien werden in einem A-Posteriori-Individualradiuszwischenspeicher 13 zur Laufzeit des Verfahrens hinterlegt.

Während bzw. gleichzeitig mit der A-Posteriori-Individualradiusberechnung 12 wird über eine zuvor festgelegte Validierungsbedingung 14 geprüft, ob die ermittelten Radien hinreichend zuverlässig sind. Die Validierungsbedingung 14 umfasst zwei Validierungskriterien 15, 16, wobei die Validierungsbedingung 14 erfüllt ist, wenn beide Validierungskriterien 15, 16 erfüllt sind.

Das erste Validierungskriterium 15 ist als eine Relaxationslängenabfrage ausgestaltet. Es ist erfüllt, wenn die akkumulierte, gefahrene Strecke des Kraftfahrzeugs eine festgelegte Relaxationslänge erreicht oder übersteigt. Die Relaxationslänge ist als eine gefahrene Strecke definiert, nämlich als diejenige gefahrene Strecke, die dem initial festgelegten, als Startwert dienenden Radiuswert entspricht.

Falls das erste Validierungskriterium 15 erfüllt ist, wird das Verfahren mit der Prüfung eines zweiten Validierungskriteriums 16 fortgesetzt.

Das zweite Validierungskriterium 16 ist als eine Inkrementenanzahlabfrage ausgestaltet. Es ist erfüllt, wenn die akkumulierte Anzahl von durch eine der Inkrementalsensoreinheiten 3 erfassten Inkrementen eine festgelegte Anzahl von Inkrementen erreicht.

Wenn das zweite Validierungskriterium 16 erfüllt ist, das heißt, falls die Validierungsbedingung 14 erfüllt ist, dann wird das Verfahren über eine Genehmigung 17 fortgesetzt.

Falls das erste Validierungskriterium 15 oder das zweite Validierungskriterium 16 hingegen nicht erfüllt ist, das heißt, falls die Validierungsbedingung 14 nicht erfüllt ist, wird das Verfahren über die Ablehnung 7 neuer Radiuswerte fortgesetzt. Und zwar werden dann für die nächste Iteration bzw. Wiederholung des Verfahrens die jeweils bisherigen Radradien verwendet. Mit anderen Worten: Die iterativ zu ermittelnden Radradien werden in einem solchen Fall nicht aktualisiert.

Unter der Voraussetzung, dass die Validierungsbedingung 14 erfüllt ist, werden die im A-Posteriori-Individualradiuszwischenspeicher 13 hinterlegten jeweiligen A-Posteriori-Individualradien als die in der aktuellen Iteration ermittelten Radien der jeweiligen Räder 1 für die weitere Verwendung durch eine Genehmigung 17 neuer Radiuswerte angenommen. Dazu werden über eine Aktualisierung 18 die in dem A-Priori-Individualradiuszwischenspeicher 10 hinterlegten Radiuswerte durch die in dem A-Posteriori-Individualradiuszwischenspeicher 13 hinterlegten Radiuswerte ersetzt. In diesem Fall werden die zuvor im A-Priori-Individualradiuszwischenspeicher 10 gespeicherten Werte in die Ablehnung 7 übertragen.

Die A-Posteriori-Individualradien, die entweder über die Ablehnung 7 neuer Radiuswerte den Werten der unmittelbar vorherigen Iteration entsprechen oder über die Genehmigung 17 neuer Radiuswerte den in der aktuellen Iteration bestimmten Werten entsprechen, münden in einer Ergebniszusammenfassung 19.

Schließlich werden die vorgenannten Schritte in einer neuen Iteration des Verfahrens iteriert bzw. wiederholt, das heißt, erneut ausgeführt, wie es in der Fahrbewegungsabfrage 4 definiert ist.

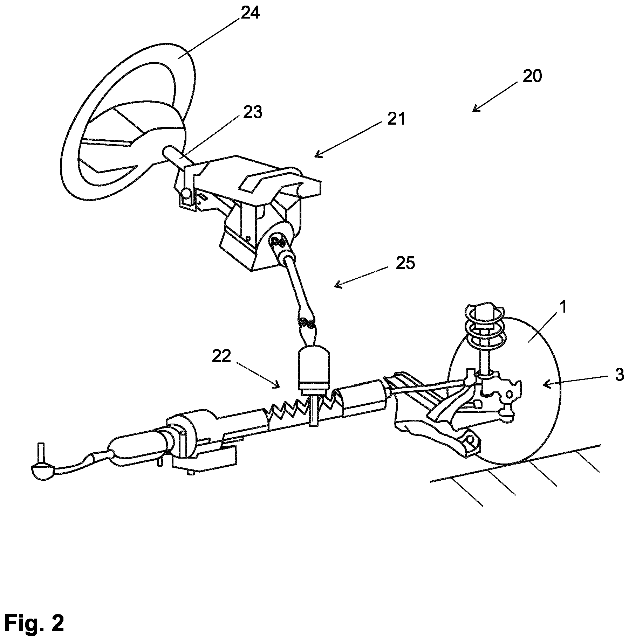

Figur 2 zeigt ein Lenksystem 20 für ein in den Figuren nicht dargestelltes Kraftfahrzeug, auf dessen vier Räder 1 das Verfahren aus Figur 1 anwendbar ist.

Das Lenksystem 20 umfasst eine Lenksäule 21 und ein Lenkgetriebe 22. Die Lenksäule 21 umfasst eine Lenkspindel 23, an deren dem Fahrer zugewandten Ende ein Lenkrad 24 befestigt ist. Das Lenkgetriebe 22 dient der Übersetzung von Lenkbefehlen, die vom Fahrer durch Drehungen des Lenkrads 26 erzeugbar sind, in entsprechende Drehungen der Räder 1 um ihre jeweiligen vertikalen Achsen. Der besseren Übersicht halber ist in Figur 2 lediglich das in Fahrzeugfahrrichtung vorne links angeordnete Rad 1 dargestellt. Der strukturelle und funktionelle Aufbau des in Fahrzeugfahrrichtung vorne rechts angeordneten Rads 1 entspricht dem des in Fahrzeugfahrrichtung vorne links angeordneten Rads 1 in analoger Weise.

Die Lenksäule 21 und das Lenkgetriebe 22 sind über eine zwischen der Lenksäule 21 und dem Lenkgetriebe 22 angeordneten Lenkwelle 25 mechanisch wirkverbunden. Alternativ können die Lenksäule 21 und das Lenkgetriebe 22 auch über eine zwischen der Lenksäule 21 und dem Lenkgetriebe 22 angeordnete Datenübertragungseinrichtung (in den Figuren nicht dargestellt) elektrisch oder elektronisch wirkverbunden sein. Wirkverbundenheit zweier Bauelemente bedeutet hierbei, dass eine Bewegung von dem einen Bauelement auf das andere Bauelement übertragbar ist.

Dem Rad 1 ist eine als ABS-Sensor ausgebildete Inkrementalsensoreinheit 3 zugeordnet. Die Inkrementalsensoreinheit 3 dient zum Erfassen von Raddrehbewegungen verkörpernden Inkrementen. Dazu zählt die Inkrementalsensoreinheit 3 die sich während einer Raddrehbewegung bzw. Radabrollbewegung an der Inkrementalsensoreinheit 3 vorbeibewegenden, das heißt, unter der Inkrementalsensoreinheit 3 hinwegbewegenden Inkremente.

### Bezugszeichenliste

- 1: Fahrzeugrad
- 1a: erstes Rad
- 1b: zweites Rad
- 1c: drittes Rad
- 1d: viertes Rad
- 2: Fahrrichtungssensoreinheit
- 2a: Inertialsensor
- 2b: Gierratensensor
- 2c: Lenkwinkelsensor
- 3: Inkrementalsensoreinheit
- 4: Fahrbewegungsabfrage
- 5: Geradeausfahrtanalyse
- 6: Geradeausfahrtabfrage
- 7: Ablehnung (der neuen A-Posteriori-Individualradien)
- 8: Rutsch- und Schlupfabfrage
- 9: A-Priori-Individualstreckenberechnung
- 10: A-Priori-Individualradiuszwischenspeicher
- 11: Gesamtstreckenberechnung
- 12: A-Posteriori-Individualradiusberechnung
- 13: A-Posteriori-Individualradiuszwischenspeicher
- 14: Validierungsbedingung
- 15: Erstes Validierungskriterium (Relaxationslängenabfrage)
- 16: Zweites Validierungskriterium (Inkrementenanzahlabfrage)
- 17: Genehmigung (der neuen A-Posteriori-Individualradien)
- 18: Aktualisierung (der A-Priori-Individualradien anhand der neuen A-Posteriori-Individualradien)
- 19: Ergebniszusammenfassung
- 20: Lenksystem
- 21: Lenksäule
- 22: Lenkgetriebe
- 23: Lenkspindel
- 24: Lenkrad
- 25: Lenkwelle

## Patentansprüche

1. Verfahren zum iterativen Ermitteln des Radius' eines Rads (1) von einer Vielzahl von Rädern eines Kraftfahrzeugs, wobei das Kraftfahrzeug zumindest eine Fahrrichtungssensoreinheit (2) zum Erkennen von Geradeausfahrten aufweist, wobei jedem Rad (1) der Vielzahl von Rädern zumindest eine Inkrementalsensoreinheit (3) zum Erfassen von Raddrehbewegungen verkörpernden Inkrementen zugeordnet ist, umfassend folgende Schritte:
(a) Prüfen, ob das Kraftfahrzeug fährt, basierend auf Sensorwerten von zumindest einer der zumindest einen Inkrementalsensoreinheit (3);
(b) Wenn das Kraftfahrzeug fährt, Prüfen, ob das Kraftfahrzeug geradeaus fährt, basierend auf Sensorwerten der zumindest einen Fahrrichtungssensoreinheit (2);
(c) Wenn das Kraftfahrzeug geradeaus fährt, Prüfen, ob jedes Rad (1) der Vielzahl von Rädern rutsch- und schlupffrei ist, basierend auf Sensorwerten von zumindest einer der zumindest einen Inkrementalsensoreinheit (3);
(d) Wenn das Kraftfahrzeug rutsch- und schlupffrei geradeaus fährt, Bestimmen der gefahrenen Strecke von jedem Rad (1) der Vielzahl von Rädern basierend auf dem Sensorwert der jeweiligen Inkrementalsensoreinheit (3) und dem iterativ zu ermittelnden Radius des Rads (1) einer der vorherigen Iterationen, wobei der iterativ zu ermittelnde Radius des Rads (1) einer der vorherigen Iterationen während der ersten Iteration des Verfahrens einem initial festgelegten, als Startwert dienenden Wert entspricht;
(e) Bestimmen der gefahrenen Strecke des Kraftfahrzeugs basierend auf der gefahrenen Strecke von jedem Rad (1) der Vielzahl von Rädern;
(f) Ermitteln des iterativ zu ermittelnden Radius' des Rads (1) basierend auf der gefahrenen Strecke des Kraftfahrzeugs und dem Sensorwert der jeweiligen Inkrementalsensoreinheit (3);
(g) Prüfen, ob eine Validierungsbedingung erfüllt ist;
(h) Wenn die Validierungsbedingung erfüllt ist, Iterieren der vorgenannten Schritte.

2. Verfahren nach dem vorgenannten Anspruch, **dadurch gekennzeichnet, dass** mit Erfolg geprüft wird, ob das Kraftfahrzeug fährt, wenn sich zwischen zwei aufeinanderfolgenden Zeitschritten der Sensorwert eines der oder aller Inkrementalsensoreinheiten (3) um einen oder mehr als einen entsprechenden, festlegbaren Schwellwert ändert.

3. Verfahren nach einem der vorgenannten Ansprüche, **dadurch gekennzeichnet, dass** mit Erfolg geprüft wird, ob das Kraftfahrzeug geradeaus fährt, wenn sich zwischen zwei aufeinanderfolgenden Zeitschritten der Sensorwert der zumindest einen Fahrrichtungssensoreinheit (2) um weniger als einen oder bis zu einen entsprechenden, festlegbaren Schwellwert ändert.

4. Verfahren nach einem der vorgenannten Ansprüche, **dadurch gekennzeichnet, dass** mit Erfolg geprüft wird, ob jedes Rad (1) der Vielzahl von Rädern rutsch- und schlupffrei ist, wenn die Sensorwerte von zumindest zwei der Inkrementalsensoreinheiten (3) um weniger als einen oder bis zu einen entsprechenden, festlegbaren Schwellwert voneinander abweichen.

5. Verfahren nach einem der vorgenannten Ansprüche, **dadurch gekennzeichnet, dass** die gefahrene Strecke des Rads (1) bestimmt wird mittels Multiplizieren des Sensorwerts der jeweiligen Inkrementalsensoreinheit (3) mit der Auflösung der jeweiligen Inkrementalsensoreinheit (3) und mit dem iterativ zu ermittelnden Radius des Rads (1).

6. Verfahren nach einem der vorgenannten Ansprüche, **dadurch gekennzeichnet, dass** die gefahrene Strecke des Kraftfahrzeugs bestimmt wird mittels Berechnen eines Durchschnittswerts der gefahrenen Strecke aller Räder (1).

7. Verfahren nach einem der vorgenannten Ansprüche, **dadurch gekennzeichnet, dass** der iterativ zu ermittelnde Radius des Rads (1) ermittelt wird mittels Dividieren der gefahrenen Strecke des Kraftfahrzeugs durch den Sensorwert der jeweiligen Inkrementalsensoreinheit (3) und durch die Auflösung der jeweiligen Inkrementalsensoreinheit (3).

8. Verfahren nach einem der vorgenannten Ansprüche, **dadurch gekennzeichnet, dass** die Validierungsbedingung eine oder mehrere Validierungskriterien umfasst, wobei die Validierungsbedingung erfüllt ist, wenn alle Validierungskriterien erfüllt sind.

9. Verfahren nach Anspruch 8, **dadurch gekennzeichnet, dass** ein Validierungskriterium erfüllt ist, wenn eine festlegbare Relaxationslänge erreicht worden ist, wobei die Relaxationslänge als gefahrene Strecke definierbar ist, und/oder wenn eine festlegbare gefahrene Strecke des Rads (1) oder eine festlegbare gefahrene Strecke des Kraftfahrzeugs oder eine festlegbare Anzahl von erfassten Inkrementen von zumindest einer der zumindest einen Inkrementalsensoreinheit (3) erreicht worden ist.

## Claims

1. A method for iteratively determining the radius of a wheel (1) of a number of wheels of a motor vehicle, wherein the motor vehicle has at least one driving direction sensor unit (2) for detecting straight line travel, wherein each wheel (1) of the number of wheels is assigned at least one incremental sensor unit (3) for detecting increments embodying wheel rotational movements, including the following steps:
(a) Checking whether the motor vehicle is driving based on sensor values of at least one of the incremental sensor units (3);
(b) When the motor vehicle is driving, checking whether the motor vehicle is driving in a straight line based on sensor values of the at least one driving direction sensor unit (2);
(c) When the motor vehicle is driving in a straight line, checking whether each wheel (1) of the number of wheels is slide-free and slip-free, based on sensor values of at least one of the at least one incremental sensor unit (3);
(d) If the motor vehicle is driving in a straight line without sliding and slipping, determining the distance driven by each wheel (1) of the number of wheels based on the sensor value of the respective incremental sensor unit (3) and the radius to be iteratively determined of the wheel (1) of one of the previous iterations, wherein the radius to be iteratively determined of the wheel (1) of one of the previous iterations during the first iteration of the method corresponds to an initially determined value serving as the starting value;
(e) Determining the distance driven by the motor vehicle based on the distance driven by each wheel (1) of the number of wheels;
(f) Determining the radius to be determined iteratively of the wheel (1) based on the distance travelled by the motor vehicle and the sensor value of the respective incremental sensor unit (3);
(g) Verifying that a validation condition is met;
(h) If the validation condition is met, iterating the aforementioned steps.

2. The method as claimed in the aforementioned claim, **characterized in that** it is successfully checked whether the motor vehicle is driving if between two consecutive time steps the sensor value of one or all incremental sensor units (3) changes by or by more than a corresponding, definable threshold value.

3. The method as claimed in any one of the aforementioned claims, **characterized in that it** is successfully checked whether the motor vehicle is driving in a straight line, if between two consecutive time steps the sensor value of at least one driving direction sensor unit (2) changes by less than or by up to a corresponding, definable threshold value.

4. The method as claimed in any one of the aforementioned claims, **characterized in that it** is successfully checked whether each wheel (1) of the number of wheels is slide-free and slip-free, if the sensor values of at least two of the incremental sensor units (3) differ by less than or by up to a corresponding, definable threshold value.

5. The method as claimed in any one of the aforementioned claims, **characterized in that** the distance driven by the wheel (1) is determined by multiplying the sensor value of the respective incremental sensor unit (3) by the resolution of the respective incremental sensor unit (3) and by the radius to be iteratively determined of the wheel (1).

6. The method as claimed in any one of the aforementioned claims, **characterized in that** the distance driven by the motor vehicle is determined by calculating an average value of the distance driven by all wheels (1).

7. The method as claimed in any one of the aforementioned claims, **characterized in that** the radius to be iteratively determined of the wheel (1) is determined by dividing the driven distance of the motor vehicle by the sensor value of the respective incremental sensor unit (3) and by the resolution of the respective incremental sensor unit (3).

8. The method as claimed in any one of the aforementioned claims, **characterized in that** the validation condition includes one or more validation criteria, wherein the validation condition is met if all validation criteria are met.

9. The method as claimed in claim 8, **characterized in that** a validation criterion is met if a definable relaxation length has been achieved, wherein the relaxation length can be defined as a driven distance, and/or if a definable driven distance of the wheel (1) or a definable driven distance of the motor vehicle or a definable number of recorded increments of at least one of the at least one incremental sensor unit (3) has been achieved.

## Revendications

1. Procédé d'identification itérative du rayon d'une roue (1) d'une pluralité de roues d'un véhicule automobile, le véhicule automobile possédant au moins une unité de détection de direction de déplacement (2) destinée à reconnaître les déplacements en ligne droite, au moins une unité de détection incrémentale (3) destinée à acquérir des incréments matérialisant des mouvements de roue étant associée à chaque roue (1) de la pluralité de roues, comprenant les étapes suivantes :
(a) vérification si le véhicule automobile se déplace, en se basant sur des valeurs de capteur d'au moins l'une de l'au moins une unité de détection incrémentale (3) ;
(b) lorsque le véhicule automobile se déplace, vérification si le véhicule automobile se déplace en ligne droite en se basant sur des valeurs de capteur de l'au moins une unité de détection de direction de déplacement (2) ;
(c) lorsque le véhicule automobile se déplace en ligne droite, vérification si chaque roue (1) de la pluralité de roues est exempte de dérapage et de patinage, en se basant sur des valeurs de capteur d'au moins l'une de l'au moins une unité de détection incrémentale (3) ;
(d) lorsque le véhicule automobile se déplace en ligne droite en étant exempt de dérapage et de patinage, détermination de la distance parcourue par chaque roue (1) de la pluralité de roues en se basant sur la valeur de capteur de l'unité de détection incrémentale (3) respective et le rayon de la roue (1) à identifier de manière itérative de l'une des itérations précédentes, le rayon de la roue (1) à identifier de manière itérative de l'une des itérations précédentes correspondant à une valeur servant de valeur de départ, spécifiée initialement, pendant la première itération du procédé ;
(e) identification de la distance parcourue du véhicule automobile en se basant sur la distance parcourue par chaque roue (1) de la pluralité de roues ;
(f) identification du rayon de la roue (1) à identifier de manière itérative en se basant sur la distance parcourue du véhicule automobile et la valeur de capteur de l'unité de détection incrémentale (3) respective ;
(g) vérification si une condition de validation est remplie ;
(h) lorsque la condition de validation est remplie, itération des étapes précédentes.

2. Procédé selon la revendication précédente, **caractérisé en ce que** la vérification si le véhicule automobile se déplace produit un résultat positif lorsque, entre deux étapes temporelles successives, la valeur de capteur de l'une ou de la totalité des unités de détection incrémentale (3) présente une variation égale ou supérieure à une valeur de seuil pouvant être spécifiée en conséquence.

3. Procédé selon l'une des revendications précédentes, **caractérisé en ce que** la vérification si le véhicule automobile se déplace en ligne droite produit un résultat positif lorsque, entre deux étapes temporelles successives, la valeur de capteur de l'au moins une unité de détection de direction de déplacement (2) présente une variation inférieure ou au maximum égale à une valeur de seuil pouvant être spécifiée en conséquence.

4. Procédé selon l'une des revendications précédentes, **caractérisé en ce que** la vérification si chaque roue (1) de la pluralité de roues est exempte de dérapage et de patinage produit un résultat positif lorsque les valeurs de capteur d'au moins deux unités de détection incrémentale (3) présentent une différence l'une par rapport à l'autre inférieure ou au maximum égale à une valeur de seuil pouvant être spécifiée en conséquence.

5. Procédé selon l'une des revendications précédentes, **caractérisé en ce que** la distance parcourue par la roue (1) est déterminée au moyen de la multiplication de la valeur de capteur de l'unité de détection incrémentale (3) respective par la résolution de l'unité de détection incrémentale (3) respective et par le rayon de la roue (1) identifié de manière itérative.

6. Procédé selon l'une des revendications précédentes, **caractérisé en ce que** la distance parcourue par le véhicule automobile est déterminée au moyen du calcul d'une valeur moyenne de la distance parcourue par toutes les roues (1).

7. Procédé selon l'une des revendications précédentes, **caractérisé en ce que** le rayon de la roue (1) à identifier de manière itérative est identifié au moyen de la division de la distance parcourue par le véhicule automobile par la valeur de capteur de l'unité de détection incrémentale (3) respective et par la résolution de l'unité de détection incrémentale (3) respective.

8. Procédé selon l'une des revendications précédentes, **caractérisé en ce que** la condition de validation comprend un ou plusieurs critères de validation, la condition de validation étant remplie lorsque tous les critères de validation sont remplis.

9. Procédé selon la revendication 8, **caractérisé en ce qu'**un critère de validation est rempli lorsqu'une longueur de relaxation pouvant être spécifiée a été atteinte, la longueur de relaxation pouvant être définie comme une distance parcourue, et/ou lorsqu'une distance parcourue par la roue (1) pouvant être spécifiée ou une distance parcourue par le véhicule automobile pouvant être spécifiée ou un nombre pouvant être spécifié d'incréments acquis par au moins l'une de l'au moins une unité de détection incrémentale (3) a été atteint.
